# EUROPÄISCHE PATENTSCHRIFT

(11) **EP 2 173 065 B1**
(45) Veröffentlichungstag und Bekanntmachung des Hinweises auf die Patenterteilung: **09.11.2011**
(21) Anmeldenummer: 09012189.8
(22) Anmeldetag: 25.09.2009
(51) Int. Cl.: H04L 12/40

(54) **Kommunikationsentität zur Kommunikation über ein busorientiertes Kommunikationsnetzwerk**
Communication entity for communicating over a bus oriented communication network
Entité de communication pour la communication sur un réseau de communication du type bus

(30) Priorität: 06.10.2008 DE 102008050102
(43) Veröffentlichungstag der Anmeldung: 07.04.2010
(73) Patentinhaber: Phoenix Contact GmbH & Co. KG, 32825 Blomberg (DE)
(72) Erfinder: Kuschke, Detlef, 32816 Schieder-Schwalenberg (DE)
(74) Vertreter: Blumbach - Zinngrebe

(56) Entgegenhaltungen:
- EP-A1- 0 732 654
- EP-A2- 1 193 916
- DE-A1- 19 714 761
- US-A1- 2007 268 973
- JORDAN J R ET AL: "A fibre optically extended field bus" MEASUREMENT SCIENCE AND TECHNOLOGY, IOP, BRISTOL, GB, Bd. 3, Nr. 9, 1. September 1992 (1992-09-01), Seiten 902-908, XP020065303 ISSN: 0957-0233

## Beschreibung

Die vorliegende Erfindung betrifft busorientierte Kommunikationsnetzwerke.

In busorientierten Kommunikationsnetzwerken, welche beispielsweise in Automatisierungssystemen Anwendung finden, ist es oft notwendig, die teilnehmenden Kommunikationsentitäten ohne Auswirkungen auf verbleibende Kommunikationsentitäten während eines laufenden Kommunikationsbetriebs rückwirkungsfrei zu entfernen oder hinzuzufügen, was mit dem Begriff "Hot Swapping" bezeichnet ist.

Hierzu können beispielsweise Feldbussysteme wie der Profibus oder der CAN-Bus (CAN: Controller Area Network) gemäß einem Multidrop-Bussystem bzw. einer Multidrop-Busanordnung bzw. -topologie eingesetzt werden, welche beispielsweise gemäß dem Standard RS 485 konfiguriert ist. Hierbei sind die Kommunikationsteilnehmer parallel über eine gemeinsame Kommunikationsleitung verbunden, z.B. über seriell an dieser Kommunikationsleitung angekoppelte Stichleitungen bzw. Knotenabzweigungen zu den einzelnen Teilnehmern. Andere Feldbussysteme hierzu basieren, wie beispielsweise das SERCOS-Bussystem, auf einem Punkt-zu-Punkt-System bzw. einer Punkt-zu-Punkt-Busanordnung mit in Form eines Rings aufgebauten und aneinander geschalteten Punkt-zu-Punkt-Verbindungen. Zur Realisierung der Redundanz-Eigenschaft wird hierbei oft ein zweiter Ring vorgesehen, so dass ein Doppelring realisiert werden muss.

Beide Busanordnungen bzw. Bussysteme sind jedoch mit Nachteilen behaftet. So ist die Performance der Multidrop-Kommunikationsbusse durch ungenügende Leistungsanpassungsmöglichkeiten des Kommunikationsnetzwerkes stark begrenzt. Darüber hinaus ist bei einer Multidrop-Kommunikationsverbindung eine gezielte Teilnehmeradressierung notwendig, bei der jeder Teilnehmer eine Adresseinstellung vornimmt. Auf der anderen Seite kann eine Aneinanderkettung von Punkt-zu-Punkt-Verbindungen ferner bei einer zusätzlichen Auslegung in Form des bereits erwähnten Doppelringes oft nur eine einzige Unterbrechung der Kommunikationsverbindung kompensieren. Darüber hinaus sind die bekannten Kommunikationsbuskonzepte nicht flexibel, da deren jeweilige Struktur unterschiedliche Betriebsmodi des Kommunikationssystems, welche beispielsweise daten- oder dienstspezifisch sein können, nicht berücksichtigen.

Es ist die Aufgabe der vorliegenden Erfindung, ein effizientes und flexibles Konzept zur busorientierten Kommunikation zu schaffen.

Diese Aufgabe wird durch die Merkmale des unabhängigen Patentanspruchs gelöst. Vorteilhafte Weiterbildungsformen werden in den abhängigen Patentansprüchen beschrieben.

Die Erfindung basiert auf der Erkenntnis, dass ein effizientes Buskommunikationssystem dadurch realisiert werden kann, wenn die daran angeschalteten Kommunikationsentitäten in Abhängigkeit von einem Betriebsmodus ein geeignetes Kommunikationsbus-System auswählen können. Das setzt voraus, dass die Kommunikationsentitäten eingerichtet sind, gemäß zumindest zwei Kommunikationsbus-System zu arbeiten. Dadurch wird ein branchenübergreifend einsetzbares Gesamtsystem bereitgestellt, das beispielsweise für Prozessapplikationen die Hot-Swapping-Eigenschaft mit einer schnellen Datenübertragung für beispielsweise Maschinen- und Anlagenbau vereint.

Zur Realisierung der schnellen Datenübertragung mit Taktraten oberhalb von 25 MHz können beispielsweise Punkt-zu-Punkt orientierte Kommunikationsbussysteme wie das Profinet, EtherCAT oder SERCOS III eingesetzt werden. Darüber hinaus kann hierfür auch effizient ein Summenrahmenprotokoll verwendet werden. Derartige Systeme erfüllen insbesondere maschinen- und anlagenbauspezifische Anforderungen hinsichtlich der Netzwerk-Performance.

Die Hot-Swapping-Eigenschaft, also beispielsweise das rückwirkungsfreie Ziehen oder Stecken von Teilnehmern aus einer beispielsweise modularen Station während eines laufenden Betriebs, kann beispielsweise durch Multidrop-Systeme wie beispielsweise das Feldbus oder das Profibus PA bereitgestellt werden, bei denen alle Teilnehmer parallel an einen Kommunikationsstrang angeschlossen sind. Derartige Topologien erfüllen trotz einer gegebenenfalls reduzierten Übertragungsgeschwindigkeit insbesondere Anforderungen, welche typischerweise in der Prozesstechnik gestellt werden. Die derartigen Kommunikationsprotokollen zugrunde liegenden Eigenschaften sind bevorzugt nachrichtenorientiert, so dass bisher üblicherweise eine zusätzliche Vergabe von Adressen bereits vor einer Aufnahme eines Nutzbetriebs durch einen Anwender explizit durchgeführt werden musste, worauf erfindungsgemäß jedoch verzichtet werden kann.

Aus der DE 197 14 761 Al ist eine Datenkommunikationsverbindung in einem hierarchischen Kommunikationsnetz mit Bus bekannt, wobei zwei gleichwertige Einheiten gleicher Hierarchieebene über zwei Kommunikations-Subsysteme mit anderen Knoten kommunizieren können. Auch aus JORDAN JR ET AL: "Afibre optically extended field bus" Measurement Science and Technology, IOP, Bristol, GB, Bd. 3, Nr. 9, 1, September 2002, Seiten 902-908, XP020065303 ISSN: 0957-0233 ist es grundsätzlich bekannt, innerhalb eines Netzwerkes zwei Kommunikations-Subsysteme vorzusehen.

Die Erfindung betrifft ein Buskommunikationssystem mit einer Mehrzahl von Kommunikationsentitäten, welche eingerichtet sind, über ein busorientiertes Kommunikationsnetzwerk zu kommunizieren, wobei eine Kommunikationsentität der Mehrzahl der Kommunikationsentitäten als eine Masterentität eingerichtet ist und wobei die übrigen Kommunikationsentitäten der Mehrzahl der Kommunikationsentitäten als Slaveentitäten eingerichtet sind. Jede Kommunikationsentität besitzt zur Kommunikation über ein busorientiertes Kommunikationsnetzwerk mit eine Steuereinrichtung, welche ausgebildet ist, ansprechend auf ein Auswahlsignal gemäß einem ersten Kommunikationsbus-Subsystem oder gemäß einem zweiten Kommunikationsbus-Subsystem über das Kommunikationsnetzwerk zu kommunizieren, und eine Auswahleinrichtung zum Erzeugen des Auswahlsignals in Abhängigkeit von einem Betriebsmodus der Kommunikationsentität, um das erste Kommunikationsbus-Subsystem oder das zweite Kommunikationsbus-Subsystem auszuwählen.

Das erste Kommunikations-Subsystem bildet ein Punkt-zu-Punkt-System und das zweite Kommunikations-Subsystem ein Multidrop-System innerhalb des busorientierten Kommunikationsnetzwerks.

Gemäß einer Ausführungsform umfasst der Betriebsmodus einen ersten Betriebsmodus mit Betriebsphasen zur Konfiguration und/oder Adressierung des busorientierten Kommunikationsnetzwerkes und/oder daran anschließbaren Kommunikationsentitäten und/oder zur Übertragung von Prozessdaten und/oder Parameterdaten und einen zweiten Betriebsmodus mit Betriebsphasen zur Konfiguration und/oder Adressierung des busorientierten Kommunikationsnetzwerkes und/oder daran anschließbaren Kommunikationsentitäten und/oder zur Übertragung von Prozessdaten und/oder Parameterdaten, wobei die Auswahleinrichtung ausgebildet ist, im ersten Betriebsmodus bevorzugt das erste Kommunikations-Subsystem und im zweiten Betriebsmodus bevorzugt das zweite Kommunikations-Subsystem zur Übertragung von Prozessdaten und/oder Parameterdaten, insbesondere ausschließlich zur Übertragung von Prozessdaten und/oder Parameterdaten, auszuwählen.

Gemäß einer Ausführungsform ist die Auswahleinrichtung ausgebildet, das erste Kommunikations-Subsystem im störungsfreien ersten Betriebsmodus und das zweite Kommunikations-Subsystem im gestörten ersten Betriebsmodus auszuwählen, oder umgekehrt.

Gemäß einer Ausführungsform umfasst die Kommunikationsentität eine gemeinsame Hardwareanschlusseinheit zum Kommunizieren über das erste Kommunikations-Subsystem und zum Kommunizieren über das zweite Kommunikations-Subsystem.

Gemäß einer Ausführungsform umfasst das Buskommunikationssystem eine erste Verdrahtungsanordnung zur Verbindung der Kommunikationsentitäten gemäß dem ersten Kommunikations-Subsystem und eine zweite Verdrahtungsanordnung zur Verbindung der Kommunikationsentitäten gemäß dem zweiten Kommunikations-Subsystem.

Gemäß einer Ausführungsform umfasst das Buskommunikationssystem eine Mehrzahl von Kopplungsgliedern, insbesondere T-Kopplungsgliedern, zum modularen Koppeln der Kommunikationsentitäten gemäß dem ersten Kommunikations-Subsystem und gemäß dem zweiten Kommunikations-Subsystem.

Gemäß einer Ausführungsform ist eine Verbindung vorgesehen, um das erste Kommunikations-Subsystem oder das zweite Kommunikations-Subsystem zu einer Ringkommunikations-Subsystem zu ergänzen.

Weitere Ausführungsbeispiele der vorliegenden Erfindung werden Bezug nehmend auf die beiliegenden Zeichnungen näher erläutert. Es zeigen:
Fig. 1 eine Kommunikationsentität zur Kommunikation über ein busorientiertes Kommunikationsnetzwerk;
Fig. 2 Bus orientierte Kommunikationsnetzwerke gemäß einem ersten und einem zweiten Kommunikationsbus-Subsystem;
Fig. 3 ein Buskommunikationssystem;
Fig. 4 ein Buskommunikationssystem;
Fig. 5 basierend auf Fig. 3 eine Struktur eines Masters; und
Fig. 6 basierend auf Fig. 3 eine Struktur eines Slaves.

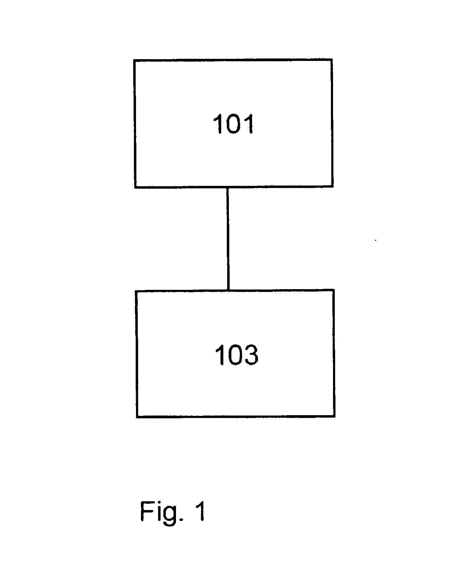

Fig. 1 zeigt ein Blockdiagramm einer Kommunikationsentität, beispielsweise eines Masters oder eines Slaves, zur Kommunikation über ein Bus orientierte Kommunikationsnetzwerk mit einer Steuereinrichtung 101 und einer Auswahleinrichtung 103. Die Steuereinrichtung 101 kann einen Prozessor und/oder Firmware und/oder Hardware und z.B. eine darauf aufbauende Logikschaltung enthalten. Die Auswahleinrichtung 103 erzeugt in Abhängigkeit von einem Betriebsmodus der Kommunikationsentität, welcher beispielsweise daten-, dienst- oder störungsabhängig sein kann, ein Auswahlsignal, um ein erstes oder ein zweites Kommunikationsbus-Sybsystem auszuwählen. Diese Subsysteme sind hierzu innerhalb des busorierten Kommunikationsnetzwerkes und der Kommunikationsentität, wie nachfolgend aufgezeigt, zur Auswahl integriert. Das Auswahlsignal wird der Steuereinrichtung zugeleitet, welche ansprechend hierauf insbesondere im Fall einer Prozessoreinrichtung beispielsweise programmtechnisch eingerichtet wird, um gemäß dem ersten oder dem zweiten Kommunikationsbus-Subsystem zu kommunizieren. Die Kommunikationsentität kann hierzu ferner einen Sender und/oder einen Empfänger zur Kommunikation über das Kommunikationsnetzwerk, welches grundsätzlich auch drahtlos oder drahtgebunden sein kann, aufweisen.

Erfindungsgemäß kann in der Kommunikationsentität, welche beispielsweise als ein Master arbeiten kann, neben einer seriellen Highspeed-Bustechnik für ein Punkt-zu-Punkt-Kommunikations-Subsystem zusätzlich ein Bus-Subsystem mit der Multidrop-Technik in einer Master-Baugruppe integriert werden. Die Gesamtfunktionalität kann beispielsweise durch vorbestimmte Mechanismen oder Logikschaltungen, die sowohl in einer als Master als auch als Slave arbeitenden Kommunikationsentität implementiert sein können, realisiert werden. Bevorzugt wird das Hauptkommunikationssystem in Form eines Punkt-zu-Punkt-Verbindungssystems realisiert, wobei die Multidrop-Topologie als ein Nebensystem bzw. als ein Fall-Back-System vorgesehen sein kann. Diese Ausbildung ist somit vorteilhaft für Anwendungsbereiche im Maschinen- und Anlagenbau.

Wird alternativ z.B. das Hauptkommunikationssystem in Form einer Multidrop-Topologie für Anwendungsbereiche in der Prozesstechnik für nachrichtenorientierte Datenübertragungen realisiert, kann das Punkt-zu-Punkt-Verbindungssystem insbesondere bei dauerhaften Störungen der Multidrop-Topologie als ein Nebensystem bzw. als ein Fall-Back-System vorgesehen sein.

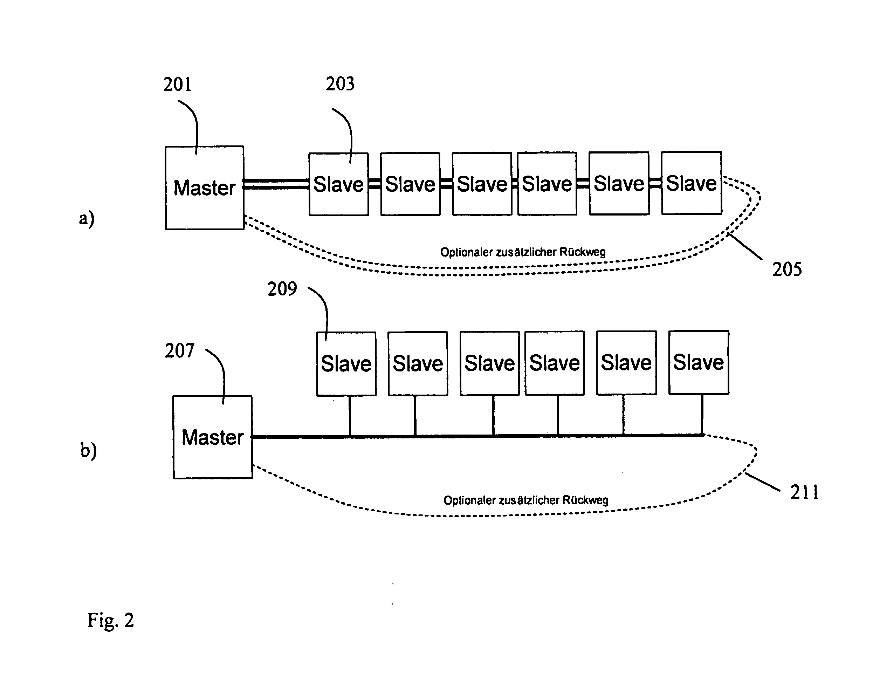

Fig. 2 zeigt zwei Kommunikationsbustopologien, welche mit der erfindungsgemäßen Kommunikationsentität realisierbar sind. In Fig. 2a ist beispielhaft eine serielle Bustopologie mit einem Master 201 und einer Mehrzahl von seriell geschalteten Slaves 203 dargestellt. Durch die Punkt-zu-Punkt-Verbindungsanordnung und entsprechender Protokollausführung ist es möglich, eine äußerst schnelle Datenübertragung bereit zu stellen. Optional ist eine Verbindung 205 vorgesehen, welche die in Fig. 2a dargestellte Topologie zu einer Ringtopologie ergänzt.

Fig. 2b zeigt eine Multidrop-Topologie mit einem Master 207 und einer Mehrzahl von Slaves 209, welche beispielsweise die Merkmale der erfindungsgemäßen Kommunikationsentität aufweisen können. Durch die in Fig. 2b realisierte Multidrop-Topologie und entsprechender Protokollausführung ist es möglich, dass jeder Slave 209 auch direkt mit dem Master 207 und/oder auch die Slaves untereinander direkt miteinander kommunizieren kann. Dabei kann optional eine Verbindung 211 vorgesehen sein, welche die Topologie zu einer Ringtopologie ergänzt.

Erfindungsgemäß sind die Kommunikationsentitäten eingerichtet, im Kontext beider in Fig. 2 dargestellten Topologien zu arbeiten. Dabei wird gemäß dem in Fig. 2a dargestellten seriellen Bus-subsystem ein Bussystem realisiert, welches für eine Übertragung von beispielsweise Prozess- und Parameterdaten sowie für die Konfiguration sowie die Adressierung des Bussystems bzw. der daran angeschalteten Entitäten vorgesehen ist. Soll nur gemäß diesem Bussubsystem kommuniziert werden, wird dies nachfolgend auch als ein erster Betriebsmodus bzw. als eine erste Betriebsart bzw. auch als Betriebsart A bezeichnet. Diese Betriebsart A erfüllt im Wesentlichen die Anforderungen des Maschinenbaus. In einem zweiten Betriebsmodus bzw. einer zweiten Betriebsart bzw. einer Betriebsart B, kann z.B. das in Fig. 2b dargestellte Bussubsystem hingegen ausschließlich für eine Übertragung von Prozess- und/oder Parameterdaten eingesetzt werden und nur für die Konfiguration und die Adressierung des Bussystems wird das in Fig. 2a dargestellte Bussubsystem eingesetzt. Diese Betriebsart B erfüllt im Wesentlichen die Anforderungen der Prozesstechnik.

Erfindungsgemäß ist auch das Ansprechen auf eine Kombination der vorstehend beschriebenen Betriebsarten A und B und entsprechende Auswählen und Steuern des ersten oder zweiten Subsystems möglich. So ist es möglich, beispielsweise vor Eintreten einer Störung das in Fig. 2a dargestellte Subsystem während der Betriebsart A einzusetzen, wobei nach einem Eintreten einer Störung die Betriebsart B mit dem in Fig. 2b dargestellten Subsystem genutzt werden kann, oder umgekehrt.

Eine Umschaltung zwischen den vorstehend genannten Betriebsarten bzw. -modi kann beispielsweise durch den Master, durch die jeweilige Applikation oder automatisch durch die weiteren Kommunikationsentitäten selbst durchgeführt werden. Insbesondere kann das in Fig. 2a dargestellte Bussystem einfach und schnell konfiguriert werden. Falls die Hot-Swapping-Eigenschaft benötigt wird, kann beispielsweise bei einem Slave-Teilnehmer auf das Multidrop-Bussubsystem umgeschaltet werden, was beispielsweise auch mittels einer Änderung im Kommunikationsprotokoll realisiert werden kann. Ist das Hauptsystem wieder funktionsfähig, so kann beispielsweise erneut auf die für den störungsfreien Fall vorgesehene Betriebsart umgeschaltet werden. Somit wird erfindungsgemäß bevorzugt eine hybride Protokollstruktur eingesetzt, welche die Übertragung von Prozessdaten über einen hierfür vorbestimmten Parameterkanal ermöglicht.

Wie in den Fig. 2a und 2b ferner dargestellt kann die jeweilige zusätzliche Verbindung 205 bzw. 211 in Form eines beispielsweise zusätzlichen Kabels zum Ende einer modularen Eingabe-Ausgabe-Station geführt werden, um die Verfügbarkeit des Systems bei Ausfall einer elektromechanischen Verbindung oder einer Kabelverbindung zu erhöhen. So kann auch bei Ausfall eines Rückwandbusses im Falle von modularen Systemen ununterbrochen eine Kommunikation aufrechterhalten werden.

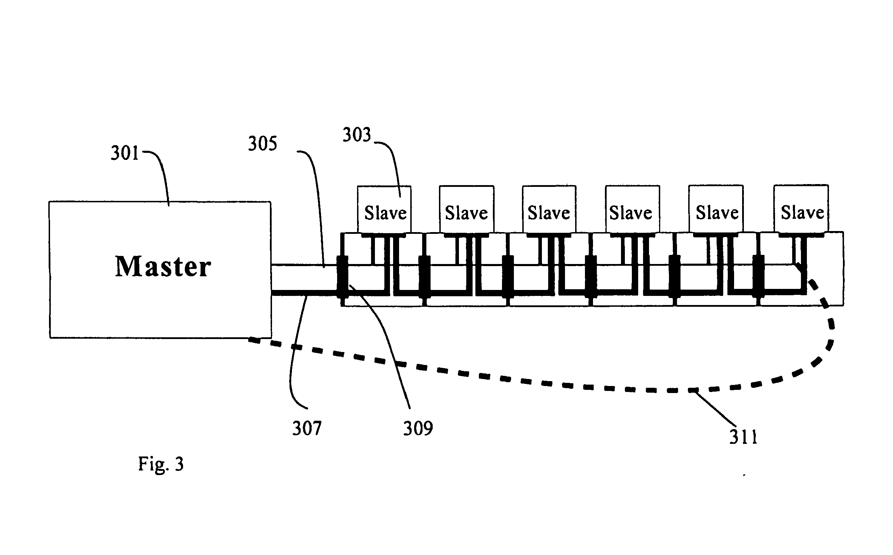

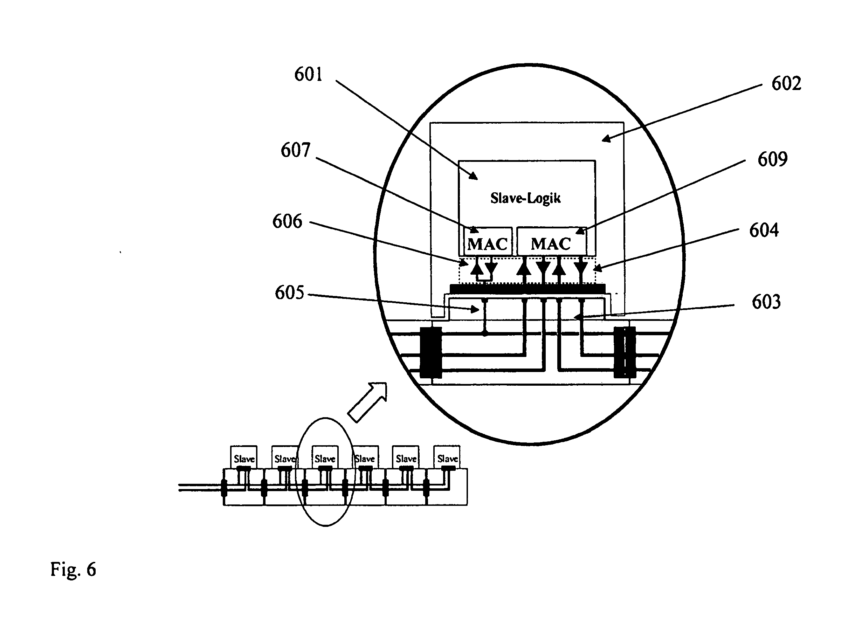

Fig. 3 zeigt ein Buskommunikationssystem, in welchem die in Fig. 2 dargestellten Subsysteme für unterschiedliche Betriebsmodi realisiert sind. Dabei sind ein Master 301 und eine Mehrzahl von Slaves 303 vorgesehen, welche bevorzugt die Merkmale der erfindungsgemäßen Kommunikationsentität aufweisen. Das Buskommunikationssystem umfasst eine erste Verdrahtungsanordnung 305 zur Realisierung der in Fig. 2b dargestellten Multidrop-Anordnung. Ferner ist eine Verdrahtungsanordnung 307 zur Realisierung der in Fig. 2a dargestellten Punkt-zu-Punkt-Anordnung vorgesehen. Sowohl der Master 301 als auch die Slaves 303 weisen jeweils eine Mehrzahl von für die jeweilige Topologie bestimmten Anschlüssen auf, welche die in Fig. 3 dargestellte Verdrahtung ermöglichen. Zwischen den Slaves können ferner Kopplungsglieder 309 vorgesehen sein, welche eine modulare Kopplung von Kommunikationsentitäten ermöglichen. Ferner ist optional eine Rückverbindung 311 vorgesehen. Der Master und jeder Slave besitzt zweckmäßig jeweils eine Hardwareanschlusseinheit, z.B. Steckereinheit, welche die jeweiligen Anschlusskontakte für die Verdrahtungsanordnungen der beiden Subsysteme in sich vereinigt, so dass folglich lediglich das Gesamtsystem von außen ersichtlich ist. Auch die Kopplungsglieder vereinigen somit zweckmäßig, wie z.B. aus Fig. 6 ersichtlich, für jede Kopplung zu einer Nachbareinheit bzw. -anordnung jeweilige notwendige Anschlusskontakte für die beiden Subsysteme jeweils innerhalb einer gemeinsamen Hardwareanschlusseinheit, z.B. Steckereinheit.

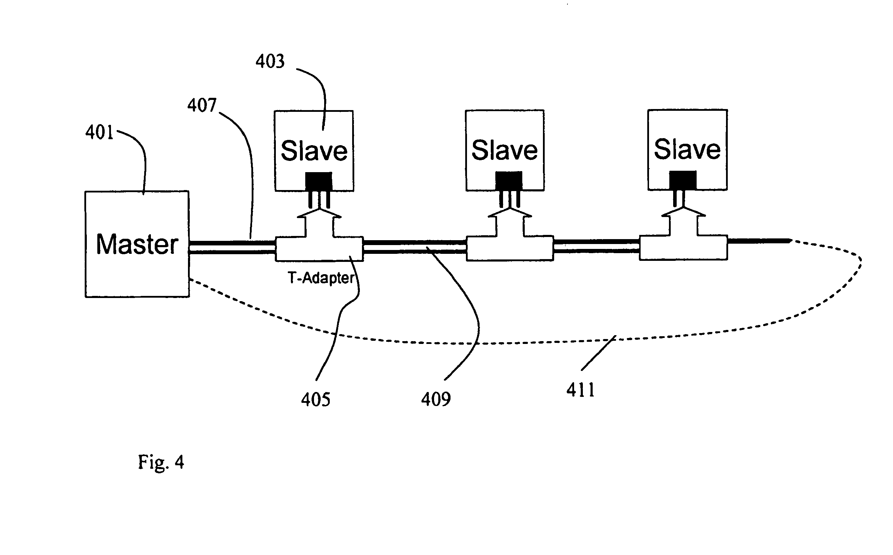

Fig. 4 zeigt ein Ausführungsbeispiel eines weiteren Bussystems mit einem Master 401 und einer Mehrzahl von Slaves 403, welche beispielsweise die Merkmale der erfindungsgemäßen Kommunikationsentität aufweisen können. Die Kommunikationsentitäten sind beispielsweise mittels T-Koppler 405 an das Bussystem angekoppelt. Das Bussystem umfasst dabei eine erste Verdrahtungsanordnung 407 zur Realisierung eines Multidrop-Subsystems sowie eine Verdrahtungsanordnung 409 zur Realisierung eines Punkt-zu-Punkt-Subsystems. Die Verdrahtungsanordnung 407 kann beispielsweise über einen optionalen Rückkopplungszweig 411 zu einer Ringarchitektur ergänzt und mit dem Master 401 verbunden werden. Das in Fig. 4 dargestellte Bussystem eignet sich insbesondere zur Anwendung in Remote-Systemen. Der Master und jeder Slave besitzt wiederum zweckmäßig jeweils lediglich eine Hardwareanschlusseinheit, welche die jeweiligen Anschlusskontakte für die Verdrahtungsanordnungen der beiden Subsysteme in sich vereinigt. Entsprechendes gilt für die T-Koppler, welche somit für jede Kopplung zu einer Nachbareinheit bzw. - anordnung zweckmäßig jeweils lediglich eine Hardwareanschlusseinheit besitzen, die die jeweiligen Anschlusskontakte für die beiden Subsysteme vereinigt.

Vereinigt somit zweckmäßig jede Hardwareanschlusseinheit, z.B. Steckereinheit bereits die jeweiligen Anschlusskontakte für die Verdrahtungsanordnungen der beiden Subsysteme in sich, sind folglich für jede Kopplung zwischen zwei Nachbareinheiten bzw. -anordnungen lediglich zwei komplementäre Hardwareanschlusseinheiten, z.B. eine buchsenartige und eine stiftartige Steckereinheit, erforderlich.

Bei geeigneter Wahl eines Kommunikationsprotokoll kann z.B. auch ein gemeinsames für die in den Fig. 3 und 4 dargestellten Subsysteme verwendet werden.

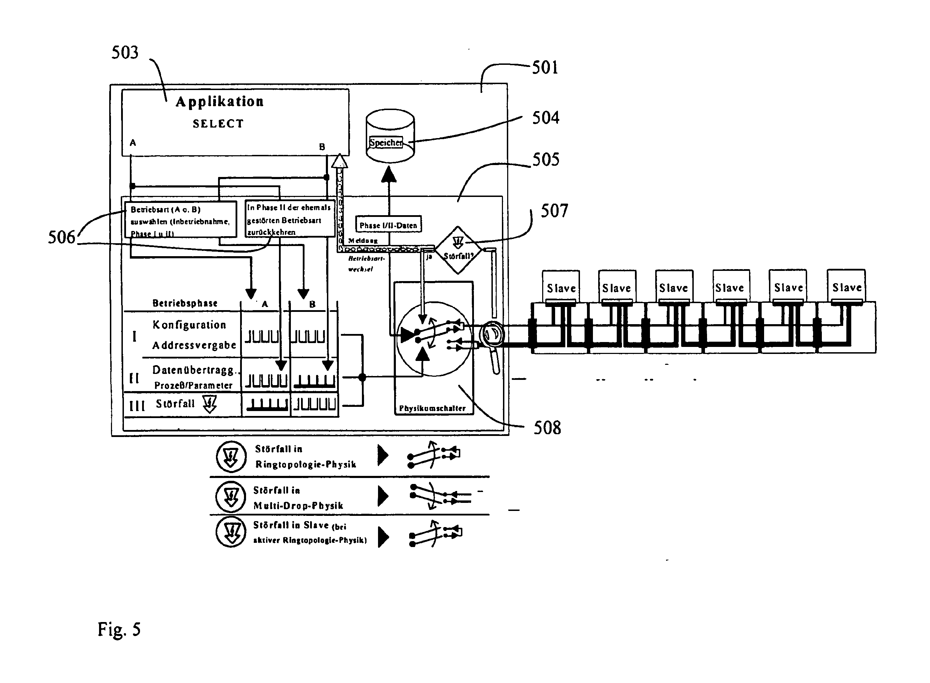

Fig. 5 verdeutlicht anhand der in Fig. 3 dargestellten Bustopologie eine Struktur eines Masters 501, welcher bevorzugt die Merkmale der erfindungsgemäßen Kommunikationsentität aufweist. Der Master 501 umfasst eine Auswahleinrichtung 503 mit zwei Ausgängen A und B, welche mit einer Steuereinrichtung 505 zwecks Betriebsartumschaltung verbunden sind. Die Ausgänge A und B der Auswahleinrichtung 503 sind beispielsweise den vorstehend beschriebenen Betriebsarten A und B zugeordnet, wobei ferner zwischen einer Konfiguration und Adressvergabe und/oder einer Übertragung von Prozessdaten oder Prozessparametern in jeder Betriebsart ausgewählt werden kann. Hierzu besitzt die Steuereinrichtung 505 Steueruntereinrichtungen 506, welche ferner eine Umschaltung auf die Betriebsart B bei Vorliegen einer Störung während der Betriebsart A, oder umgekehrt, ermöglichen. Dadurch ist es möglich, leistungsfähige Systeme zu realisieren, welche beispielsweise in dem Hot-Swapping-Fall eine Notfallstrategie ermöglichen.

Im Einzelnen ist eine Struktur eines Masters mit einer Auswahleinrichtung 503 und einer Steuereinrichtung 505 zu sehen, welche in der Betriebsart A oder B eine Inbetriebnahme in der Phase I oder Phase II veranlassen, wobei in der Phase II zu einer zuvor gestörten Betriebsart zurückgekehrt wird. Mit der Phase III ist ein Störzustand bezeichnet. Der Master umfasst ferner einen Speicher 504 sowie einen Störfalldetektor 507, welcher die Auswahleinrichtung 503 über eine Störung informiert. Ferner ist ein Schalter 508 zum Umschalten zwischen der in Fig. 5 dargestellten Punkt-zu-Punkt-Anordnung (in Fig. 5 als Ringtopologie-Physik bezeichnet)und der Multidrop-Anordnung, wobei grundsätzlich auch beide Topologien zu einer Ring-Topologie ergänzt werden können. Wie vorstehend angesprochen, sind bevorzugt die Anschlusskontakte für beide Topologien innerhalb einer Hardwareanschlusseinheit, z.B. Steckereinheit, integriert. Bei einem Störfall in der Ringtopologie-Physik wird beispielsweise auf die Multidrop-Anordnung umgeschaltet. Bei einem Störfall in der Multidrop-Physik wird beispielsweise auf die Ringtopologie-Physik umgeschaltet. Bei einem Ausfall eines Slaves bei aktiver Ringtopologie-Physik wird hingegen beispielsweise auf die Multidrop-Topologie umgeschaltet. Der Betriebswechsel wird durch den Detektor 507 eingeleitet, welcher auf den Schalter 508 einwirkt. Somit umfasst der Master bevorzugt eine gemeinsame Hardwareanschlusseinheit zum Kommunizieren über die erste Kommunikations-Verbindungsanordnung und zum Kommunizieren über die zweite Kommunikations-Verbindungsanordnung.

Im Master sorgt somit der Umschalter 508 auch für die Verbindung zwischen dem Datenspeicher 504 und des für die Datenübertragung aktiv anzuschaltenden Bussubsystems. Jede Umschaltung, egal ob von der Punkt-zu-Punkt-Topologie oder von der Multidrop-Topologie kommend, kann somit ohne Datenverlust bzw. unter Erhalt der Konsistenz des Prozessabbildes erfolgen. Ferner erfolgt zweckmäßig die Umschaltung bei jeder vom Master erkannten Störung des aktiven Bussubsystems selbstätig bei gleichzeitiger Signalisierung der Auswahleinrichtung durch ein Meldesignal über die erfolgte Umschaltung. Folglich sind im Wesentlichen alle Freiheiten zur weiteren Diagnose und Fehlermanagement gegeben.

Als vorteilhaft für die Erhaltung der Prozessabläufe bei der Rückkehr in einen ehemals ausgewählten Betriebsmodus in Folge eines eingetretenen Störfalls hat sich gezeigt, dass beim Umschalten in diesen Betriebsmodus keine erneute Adressierung und/oder Konfiguration des Bussubsystems bzw. der daran angeschalteten Entitäten mehr durchlaufen werden muss, sondern direkt mit der Datenübertragung in dem ehemals ausgewählten Betriebsmodus fortgesetzt werden kann.

Fig. 6 zeigt einen Aufbau eines Slaves mit einer Slave-Logik 601, welche in einem steckbaren Gehäuse 602 angeordnet ist, mit unterschiedlichen Bustopologien, welche jeweils einer Übertragungsphysik 604 bzw. 606 zugeordnet ist, und MAC-Elementen 609 sowie 607 (MAC: Medium Access Control).

Wie aus Fig. 6 ersichtlich, umfasst das steckbare Gehäuse 602 eine gemeinsame Hardwareanschlusseinheit für die Anschlusskontakte sowohl der Übertragungsphysik 604 als auch der Übertragungsphysik 606. Ebenso sind die Anschlusskontakte 603 und 605, welche mit den Anschlusskontakten der Übertragungsphysik 604 bzw. mit den Anschlusskontakten der Übertragungsphysik 606 zum Anschließen des Slaves an das Gesamtsystem zu koppeln sind, innerhalb einer gemeinsamen Hardwareanschlusseinheit integriert. Im dargestellten Beispiel ist die Hardwareanschlusseinheit des steckbaren Gehäuses 602 als eine buchsenartige Steckereinheit und die mit dieser zu koppelnde komplementäre Hardwareanschlusseinheit mit den Anschlusskontakten 603 und 605 somit als eine stiftartige Steckereinheit ausgebildet. Somit umfasst auch ein Slave bevorzugt eine gemeinsame Hardwareanschlusseinheit zum Kommunizieren über die erste Kommunikations-Verbindungsanordnung und zum Kommunizieren über die zweite Kommunikations-Verbindungsanordnung.

## Patentansprüche

1. Buskommunikationssystem mit einer Mehrzahl von Kommunikationsentitäten, welche jeweils eine Steuereinrichtung (101) und eine Auswahleinrichtung (103) aufweisen, wobei die Steuereinrichtung (101) dazu ausgebildet ist, ansprechend auf ein Auswahlsignal gemäß einem ersten Kommunikationsbus-Subsystem oder gemäß einem zweiten Kommunikationsbus-Subsystem über das busorientierte Kommunikationsnetzwerk zu kommunizieren, und wobei die Auswahleinrichtung (103) zum Erzeugen des Auswahlsignals in Abhängigkeit von einem Betriebsmodus der Kommunikationsentität ausgebildet ist, um das erste Kommunikationsbus-Subsystem oder das zweite Kommunikationsbus-Subsystem auszuwählen, wobei das erste Kommunikations-Subsystem ein Punkt-zu-Punkt-System und wobei das zweite Kommunikations-Subsystem ein Multidrop-System ist, und welche eingerichtet sind, über ein busorientiertes Kommunikationsnetzwerk zu kommunizieren, wobei eine Kommunikationsentität der Mehrzahl der Kommunikationsentitäten als eine Masterentität eingerichtet ist und wobei die übrigen Kommunikationsentitäten der Mehrzahl der Kommunikationsentitäten als Slaveentitäten eingerichtet sind, so dass jede Slaveentität auch direkt mit der Masterentität kommunizieren kann.

2. Buskommunikationssystem gemäß Anspruch 1, das eine erste Verdrahtungsanordnung zur Verbindung der Kommunikationsentitäten gemäß dem ersten Kommunikations-Subsystem und eine zweite Verdrahtungsanordnung zur Verbindung der Kommunikationsentitäten gemäß dem zweiten Kommunikations-Subsystem umfasst.

3. Buskommunikationssystem gemäß Anspruch 1 oder 2, das ferner eine Mehrzahl von Kopplungsgliedern zum modularen Koppeln der Kommunikationsentitäten gemäß dem ersten Kommunikations-Subsystem und gemäß dem zweiten Kommunikations-Subsystem.

4. Buskommunikationssystem gemäß Anspruch 1 oder 2, das ferner eine Mehrzahl von T-Kopplungsgliedern, zum modularen Koppeln der Kommunikationsentitäten gemäß dem ersten Kommunikations-Subsystem und gemäß dem zweiten Kommunikations-Subsystem.

5. Buskommunikationssystem gemäß einem der vorstehenden Ansprüche, wobei eine Verbindung vorgesehen ist, um das erste Kommunikations-Subsystem oder das zweite Kommunikations-Subsystem zu einem Ringkommunikations-Subsystem zu ergänzen.

6. Buskommunikationssystem gemäß Anspruch 1, wobei der Betriebsmodus einen ersten Betriebsmodus mit Betriebsphasen zur Konfiguration und Adressierung des busorientierten Kommunikationsnetzwerkes und daran anschließbaren Kommunikationsentitäten und zur Übertragung von Prozessdaten und Parameterdaten, und einen zweiten Betriebsmodus mit Betriebsphasen zur Konfiguration und Adressierung des busorientierten Kommunikationsnetzwerkes und daran anschließbaren Kommunikationsentitäten und zur Übertragung von Prozessdaten und Parameterdaten umfasst, und wobei die Auswahleinrichtung ausgebildet ist, im ersten Betriebsmodus bevorzugt das erste Kommunikations-Subsystem und im zweiten Betriebsmodus bevorzugt das zweite Kommunikations-Subsystem zur Übertragung von Prozessdaten und Parameterdaten, insbesondere ausschließlich zur Übertragung von Prozessdaten und Parameterdaten, auszuwählen.

7. Buskommunikationssystem gemäß Anspruch 1, wobei die Auswahleinrichtung (103) ausgebildet ist, das erste Kommunikations-Subsystem im störungsfreien ersten Betriebsmodus und das zweite Kommunikations-Subsystem im gestörten ersten Betriebsmodus auszuwählen.

8. Buskommunikationssystem gemäß Anspruch 1, wobei die Kommunikationsentität eine gemeinsame Hardwareanschlusseinheit zum Kommunizieren über die erste Kommunikations-Subsystem und zum Kommunizieren über die zweite Kommunikations-Subsystem umfasst.

## Claims

1. Bus communications system having a plurality of communications entities which each comprise a control device (101) and a selection device (103), wherein the control device (101) is designed to communicate via the bus-oriented communications network in response to a selection signal in accordance with a first communications bus subsystem or in accordance with a second communications bus subsystem, and wherein the selection device (103) is designed to generate the selection signal as a function of an operating mode of the communications entity, in order to select the first communications bus subsystem or the second communications bus subsystem, wherein the first communications subsystem is a point-to-point system and wherein the second communications subsystem is a multi-drop system, and which are arranged to communicate via a bus-oriented communications network, wherein a communications entity of the plurality of communications entities is arranged as a master entity and wherein the remaining communications entities of the plurality of communications entities are arranged as slave entities, so that each slave entity can also communicate directly with the master entity.

2. Bus communications system as claimed in claim 1, which comprises a first wiring arrangement for connecting the communications entities in accordance with the first communications subsystem and a second wiring arrangement for connecting the communications entities in accordance with the second communications subsystem.

3. Bus communications system as claimed in claim 1 or 2, which further [comprises] a plurality of coupling elements for modular coupling of the communications entities in accordance with the first communications subsystem and in accordance with the second communications subsystem.

4. Bus communications system as claimed in claim 1 or 2, which further [comprises] a plurality of T-coupling elements for modular coupling of the communications entities in accordance with the first communications subsystem and in accordance with the second communications subsystem.

5. Bus communications system as claimed in any one of the preceding claims, wherein a connection is provided in order to expand the first communications subsystem or the second communications subsystem into a ring communications subsystem.

6. Bus communications system as claimed in claim 1, wherein the operating mode comprises a first operating mode having operating phases for configuring and addressing the bus-oriented communications network and communications entities, which are connectable thereto, and for transmitting process data and parameter data, and a second operating mode having operating phases for configuring and addressing the bus-oriented communications network and communications entities, which are connectable thereto, and for transmitting process data and parameter data, and wherein the selection device is designed to select preferably the first communications subsystem in the first operating mode and to select preferably the second communications subsystem in the second operating mode for transmitting process data and parameter data, in particular exclusively for transmitting process data and parameter data.

7. Bus communications system as claimed in claim 1, wherein the selection device (103) is designed to select the first communications subsystem in the disturbance-free first operating mode and to select the second communications subsystem in the disturbed first operating mode.

8. Bus communications system as claimed in claim 1, wherein the communications entity comprises a common hardware connection unit for communicating via the first communications subsystem and for communicating via the second communications subsystem.

## Revendications

1. Système de communication par bus comprenant une pluralité d'entités de communication, lesquelles présentent à chaque fois un dispositif de commande (101) et un dispositif de sélection (103), le dispositif de commande (101) étant conçu pour communiquer par le biais du réseau de communication orienté bus en réaction à un signal de sélection selon un premier sous-système de bus de communication ou selon un second sous-système de bus de communication, et le dispositif de sélection (103) étant conçu pour générer le signal de sélection en fonction d'un mode de service de l'entité de communication, afin de sélectionner le premier sous-système de bus de communication ou le second sous-système de bus de communication, le premier sous-système de communication étant un système point à point et le second sous-système de communication étant un système multipoint, et lesquelles sont aménagées pour communiquer par le biais d'un réseau de communication orienté bus, une entité de communication de la pluralité des entités de communication étant installée comme une entité maître et les autres entités de communication de la pluralité des entités de communication étant installées comme entités esclaves, de sorte que chaque entité esclave peut communiquer également directement avec l'entité maître.

2. Système de communication par bus selon la revendication 1, qui comprend un premier dispositif de câblage pour la liaison des entités de communication selon le premier sous-système de communication et un second dispositif de câblage pour la liaison des entités de communication selon le second sous-système de communication.

3. Système de communication par bus selon la revendication 1 ou 2, qui présente également une pluralité d'éléments de couplage pour le couplage modulaire des entités de communication selon le premier sous-système de communication et selon le second sous-système de communication.

4. Système de communication par bus selon la revendication 1 ou 2, qui présente également une pluralité d'éléments de couplage en T, pour le couplage modulaire des entités de communication selon le premier sous-système de communication et selon le second sous-système de communication.

5. Système de communication par bus selon l'une quelconque des revendications précédentes, une liaison étant prévue pour compléter le premier sous-système de communication ou le second sous-système de communication avec un sous-système de communication annulaire.

6. Système de communication par bus selon la revendication 1, le mode de service comprenant un premier mode de service avec des phases de service pour la configuration et l'adressage du réseau de communication orienté bus et des entités de communication pouvant être raccordées au réseau et pour la transmission de données de processus et de données de paramètre, et un second mode de service avec des phases de service pour la configuration et l'adressage du réseau de communication orienté bus et d'entités de communication pouvant être raccordées au réseau et pour la transmission de données de processus et de données de paramètre, et le dispositif de sélection étant conçu pour sélectionner dans le premier mode de service de préférence le premier sous-système de communication et dans le second mode de service de préférence le second sous-système de communication pour la transmission de données de processus et de données de paramètre, en particulier exclusivement pour la transmission de données de processus et de données de paramètre.

7. Système de communication par bus selon la revendication 1, le dispositif de sélection (103) étant conçu pour sélectionner le premier sous-système de communication dans le premier mode de service sans incident et le second sous-système de communication dans le premier mode de service perturbé.

8. Système de communication par bus selon la revendication 1, l'entité de communication comprenant une unité commune de raccordement de matériel pour la communication par le premier sous-système de communication et pour la communication par le second sous-système de communication.
